(19) Europäisches Patentamt
European Patent Office
Office européen des brevets

(11) **EP 3 275 722 B1**

(12) **FASCICULE DE BREVET EUROPEEN**

(45) Date de publication et mention
de la délivrance du brevet:
**21.07.2021 Bulletin 2021/29**

(51) Int Cl.:
*H01R 13/719* *(2011.01)*  *H02M 1/42* *(2007.01)*
*H02M 1/14* *(2006.01)*  *H01R 103/00* *(2006.01)*

(21) Numéro de dépôt: **17182523.5**

(22) Date de dépôt: **21.07.2017**

(54) **BORNIER POUR UN VÉHICULE AUTOMOBILE, CONVERTISSEUR DE TENSION LE COMPRENANT, ET ÉQUIPEMENT ÉLECTRIQUE COMPRENANT UN TEL CONVERTISSEUR DE TENSION**

KLEMMLEISTE FÜR EIN KRAFTFAHRZEUG, SPANNUNGSWANDLER, DER SIE UMFASST, UND ELEKTRISCHE AUSRÜSTUNG, DIE EINEN SOLCHEN SPANNUNGSWANDLER UMFASST

TERMINAL BLOCK FOR A MOTOR VEHICLE, VOLTAGE CONVERTER INCLUDING SAME, AND ELECTRICAL EQUIPMENT INCLUDING SUCH A VOLTAGE CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2016 FR 1657151**

(43) Date de publication de la demande:
**31.01.2018 Bulletin 2018/05**

(73) Titulaire: **Valeo Systemes de Controle Moteur**
**95800 Cergy Saint Christophe (FR)**

(72) Inventeurs:
• **FALGUIER, Manuel**
**94046 Creteil (FR)**
• **SOHIER, Yannick**
**95800 Cergy Saint Christophe (FR)**

(74) Mandataire: **Mozelle, Gérard Jacques et al**
**Valeo Systèmes de Contrôle Moteur**
**Département Propriété Industrielle**
**14, avenue des Béguines**
**BP 68532 Cedex**
**95892 Cergy Pontoise (FR)**

(56) Documents cités:

| | |
|---|---|
| EP-A1- 1 148 602 | WO-A1-99/17408 |
| DE-A1- 3 400 899 | DE-A1-102010 056 008 |
| DE-U1- 29 621 936 | FR-A1- 2 940 528 |
| US-A- 4 359 764 | US-A1- 2004 257 841 |
| US-A1- 2005 239 305 | US-A1- 2006 103 490 |
| US-A1- 2007 002 594 | US-A1- 2011 094 075 |
| US-A1- 2013 134 811 | |

**Description**

L'invention a pour objet un convertisseur de tension destiné à connecter électriquement un bornier, notamment embarqué dans un véhicule automobile, et un réseau électrique.

L'invention concerne également un équipement électrique comprenant une machine électrique et un tel convertisseur de tension.

En général, un moteur électrique, notamment pour véhicule automobile, comprend un convertisseur de tension, supporté par un châssis, comprenant des unités électroniques de puissance contrôlées par une unité électronique de contrôle.

Le convertisseur de tension peut également comprendre un bloc de condensateurs configuré pour stabiliser une tension électrique reçue par les unités électroniques de puissance et pour réduire les perturbations électromagnétiques générées par les unités électroniques de puissance et de contrôle.

En particulier, les unités électroniques de puissance sont alimentées par une interface de puissance, par exemple comprise dans un bornier. Cependant, dans un tel moteur électrique, la masse de l'interface de puissance du bornier est reliée par un câble électrique au convertisseur de tension, ce qui a pour conséquence une génération de perturbations électromagnétiques au sein dudit convertisseur de tension, et notamment au niveau des unités électroniques de puissance et de contrôle.

Afin de réduire, voire supprimer, ces perturbations électromagnétiques, un filtre de mode commun est généralement intégré au niveau de l'unité électronique de contrôle.

Pour réaliser ce filtre de mode commun, l'unité électronique de contrôle est connectée électriquement au châssis, afin de faire un filtre de mode commun entre le châssis et l'interface de puissance.

Il est connu l'intégration d'un filtre de mode commun externe à un convertisseur de tension. Un tel filtre de mode commun comprend deux condensateurs reliés par des traces de puissance surmoulées de résine et connectées à des bornes de l'interface de puissance du bornier et au châssis. Le filtre de mode commun comprend également une protection configurée pour protéger la résine de la chaleur émise par les unités électroniques de puissance et de contrôle au sein du convertisseur de tension.

Cependant, cette solution technique est coûteuse car elle utilise des pièces spécifiques, notamment une protection et des traces de puissance suffisamment longues pour connecter électriquement l'interface de puissance du bornier au châssis.

De plus, cette solution technique est encombrante, et de ce fait, le filtre de mode commun est difficile à intégrer au convertisseur de tension.

En outre, de telles traces de puissance ne permettent pas de supprimer la génération de perturbations électromagnétiques au sein du convertisseur de tension.

Il est également connu l'intégration d'un filtre de mode commun directement dans un bloc de condensateurs d'un convertisseur de tension. Un tel filtre de mode commun comprend deux condensateurs du bloc de condensateurs reliés par des traces de puissance connectées à des bornes de l'interface de puissance du bornier et au châssis.

Néanmoins, le bloc de condensateurs étant volumineux, le filtre de mode commun est difficile à intégrer au convertisseur de tension.

De plus, cette solution technique nécessite des traces de puissance suffisamment longues pour connecter électriquement l'interface de puissance du bornier au châssis.

En outre, la connexion électrique entre le bloc de condensateurs et le châssis est difficile à réaliser.

Le document US 20054/257841 A1 décrit un tel convertisseur de tension.

La présente invention vise à remédier à ces inconvénients en proposant un bornier intégrant un filtre de mode commun. Un tel bornier permet une optimisation de l'intégration du filtre de mode commun au niveau du convertisseur de tension et une optimisation de la compatibilité électromagnétique des unités électroniques au sein du convertisseur de tension.

L'invention se rapporte à un convertisseur de tension selon la revendication 1.

Notamment, les distances D1, D2, D3, D4 sont telles que D1+D3 = D2+D4.

Avantageusement, l'intégration d'un filtre de mode commun au niveau du bornier dudit convertisseur de tension permet de réduire les coûts de production dudit convertisseur de tension.

En outre, un tel convertisseur de tension a une compatibilité électromagnétique améliorée par rapport aux convertisseurs de tension de l'art antérieur.

Avantageusement, le bornier selon l'invention permet d'optimiser la compatibilité électromagnétique entre le convertisseur de tension et le réseau électrique. Plus précisément, la relation entre les distances D1, D2, D3, D4 permet de limiter, voire même de rendre négligeables, les perturbations électromagnétiques émises dans le convertisseur de tension.

Le convertisseur de tension selon l'invention peut également comprendre une ou plusieurs des caractéristiques suivantes, considérées individuellement ou selon toutes les combinaisons possibles :

- le bornier est fixé au convertisseur de tension par vissage ; et/ou
- la différence entre les distances D1 et D2 est inférieure ou égale 10% de la distance maximale entre les distances D1 et D2, et la différence entre les distances D3 et D4 est inférieure ou égale 10% de la distance maximale entre les distances D3 et D4 ; notamment les distances D1 et D2 sont égales, et les distances D3 et D4 sont égales et/ou
- la somme des distances D1 et D3, et la somme des distances D2 et D4, sont inférieures ou égale à 100 mm, de préférence inférieure ou égale à 60 mm, et plus préférentiellement inférieure ou égale à 20 mm ; et/ou

- les premier et deuxième composants de filtrage comprennent respectivement au moins un condensateur ; et/ou

- la troisième trace de puissance comprend une première portion, comprenant les première et troisième bornes de connexion de la troisième trace de puissance, et une deuxième portion, comprenant les deuxième et troisième bornes de connexion de la troisième trace de puissance, et dans lequel la première trace de puissance, le premier composant de filtrage et la première portion de la troisième trace de puissance sont respectivement symétriques à la deuxième trace de puissance, au deuxième composant de filtrage et à la deuxième portion de la troisième trace de puissance par rapport à un plan de symétrie passant par la troisième borne de connexion de la troisième trace de puissance ; et/ou

- les deuxièmes bornes de connexion des première et deuxième traces de puissance sont disposées symétriquement par rapport au plan passant par la troisième borne de connexion de la troisième trace de puissance ; et/ou

- les premières bornes de connexion des première et deuxième traces de puissance sont disposées symétriquement par rapport au plan passant par la troisième borne de connexion de la troisième trace de puissance ; et/ou

- les première, deuxième et troisième traces de puissance s'étendent longitudinalement selon un premier axe (x), un deuxième axe (y) et un troisième axe (z), les axes (x, y, z) étant orthogonaux entre eux ; et/ou

- les premières bornes de connexion des première et deuxième traces de puissance sont respectivement situées sur une portion des première et deuxième traces de puissance s'étendant selon le premier axe (x) ; et/ou

- les deuxièmes bornes de connexion des première et deuxième traces de puissance sont respectivement situées sur une portion des première et deuxième traces de puissance s'étendant selon le deuxième axe (y) ; et/ou

- les première et deuxième bornes de connexion de la troisième trace de puissance sont respectivement situées sur une portion de la troisième trace de puissance s'étendant selon le troisième axe (z) ; et/ou

- les deuxièmes bornes de connexion des première et deuxième traces de puissance sont adjacentes ; et/ou

- les première, deuxième et troisième traces de puissance sont en partie surmoulées de matériau isolant électriquement ; et/ou

- le matériau isolant électriquement est un matériau plastique ; et/ou

- les première, deuxième et troisième traces de puissance sont des lames métalliques ; et/ou

- les première, deuxième et troisième traces de puissance sont des barreaux métalliques.

L'invention concerne également un équipement électrique comprenant une machine électrique et un convertisseur de tension selon l'invention destiné à contrôler une énergie électrique échangée entre la machine électrique et une source d'alimentation électrique, et dans lequel le convertisseur de tension est monté sur la machine électrique.

D'autres caractéristiques et avantages de la présente invention apparaitront à la lecture de la description détaillée de modes de réalisation donnés à titre d'exemples non limitatifs et illustrés, accompagnée des figures suivantes :

- la figure 1 représente un convertisseur de tension selon un mode de réalisation de l'invention,

- la figure 2 représente une vue agrandie d'un convertisseur de tension selon un mode de réalisation de l'invention,

- la figure 3 est une vue en coupe d'un bornier selon l'invention, et

- la figure 4 est une vue schématique d'un bornier selon un mode de réalisation de l'invention.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques.

L'invention concerne un équipement électrique, notamment pour véhicule automobile, comprenant une machine électrique et un convertisseur de tension.

Le convertisseur de tension est destiné à contrôler une énergie électrique échangée entre la machine électrique et une source d'alimentation électrique. Le convertisseur de tension peut être embarqué dans un véhicule automobile. Le convertisseur de tension peut être par exemple un onduleur de tension. En particulier, le convertisseur de tension est monté sur la machine électrique.

La source d'alimentation électrique peut être un réseau électrique, notamment un réseau électrique d'un véhicule automobile. Un réseau électrique est par exemple un réseau électrique alimenté par une tension électrique de +48V. De préférence, le réseau électrique est un réseau d'énergie électrique continue. Le réseau électrique peut comprendre une batterie alimentant ledit réseau électrique.

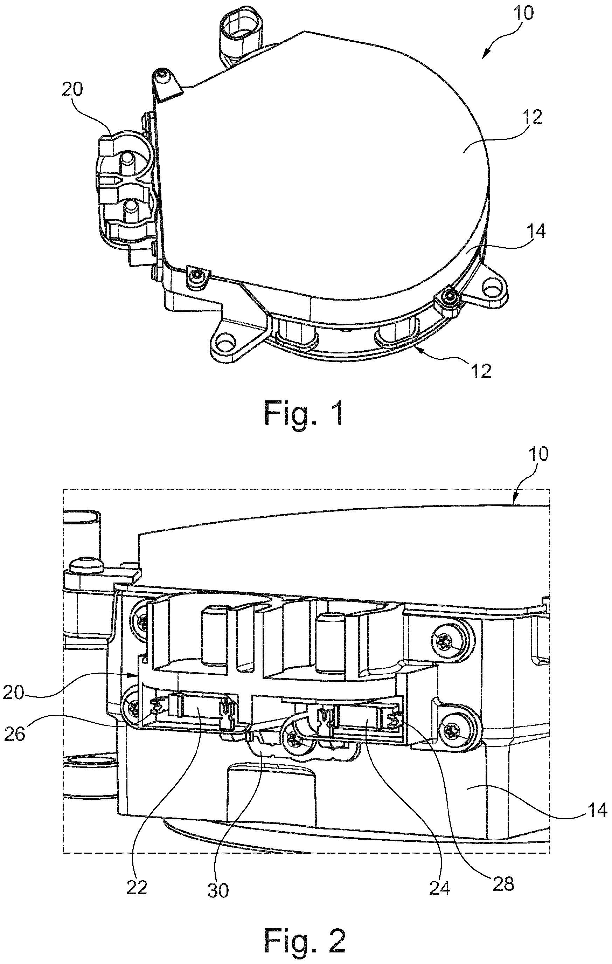

Un exemple d'un convertisseur de tension selon l'invention est représenté en figure 1.

Le convertisseur de tension 10 peut avoir une forme, notamment sensiblement cylindrique, comprenant deux bases 12 et une paroi latérale extérieure 14 reliant les deux bases 12.

Le convertisseur de tension 10 comprend un bornier 20. En particulier, le bornier 20 peut être fixé au convertisseur de tension 10 par vissage, comme représenté sur la figure 2. Le bornier 20 peut être fixé sur la paroi latérale extérieure 14 du convertisseur de tension 10.

La figure 2 représente une vue agrandie du bornier du convertisseur de tension selon l'invention.

Le bornier 20 est destiné à connecter électriquement le convertisseur de tension 10 et un réseau électrique, par exemple un réseau électrique d'un véhicule automobile.

Le bornier 20 comprend un premier composant de filtrage 22 et un deuxième composant de filtrage 24. Les premier et deuxième composants de filtrage peuvent comprendre un ou plusieurs condensateurs.

Le bornier 20 comprend également une première trace de puissance 26, une deuxième trace de puissance 28 et une troisième trace de puissance 30.

Une trace de puissance est une trace conductrice électriquement, notamment métallique, par exemple en cuivre. Une trace de puissance peut être une lame métallique ou un barreau métallique. Une trace de puissance est destinée à transmettre un courant électrique entre le réseau électrique et la machine électrique.

La première trace de puissance 26 est destinée à relier électriquement un premier pôle du réseau électrique au convertisseur de tension. Par exemple, le premier pôle du réseau électrique est un pôle de polarité positive +48V.

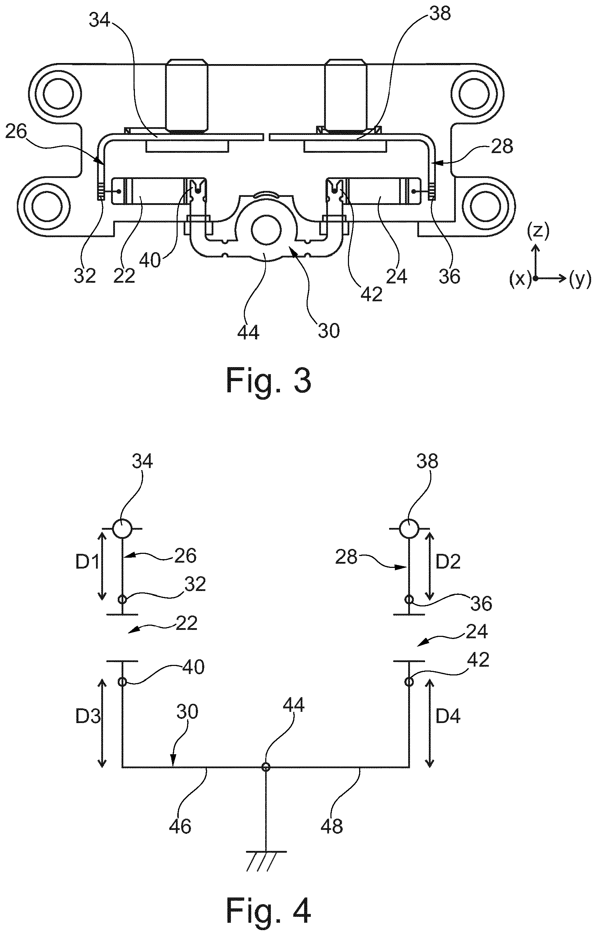

La première trace de puissance 26 comprend une première borne de connexion 32, notamment représentée sur la figure 3, connectée électriquement au premier composant de filtrage 22 et une deuxième borne de connexion 34, également visible sur la figure 3, destinée à être connectée électriquement au premier pôle du réseau électrique.

La deuxième trace de puissance 28 est destinée à relier électriquement un deuxième pôle du réseau électrique au convertisseur de tension. Par exemple, le deuxième pôle du réseau électrique est un pôle de polarité égale à 0V.

La deuxième trace de puissance 28 comprend une première borne de connexion 36 connectée électriquement au deuxième composant de filtrage 24 et une deuxième borne de connexion 38 destinée à être connectée électriquement au deuxième pôle du réseau électrique, les première et deuxièmes bornes de connexion 36, 38 étant représentées sur la figure 3.

La troisième trace de puissance 30 est destinée à connecter électriquement un pôle de potentiel de référence aux premier et deuxième composants de filtrage 22, 24. Par exemple, le pôle de potentiel de référence est un pôle de polarité égale à 12V, ou le pôle de potentiel de référence est un pôle ayant un potentiel de masse électrique. En particulier, le pôle de potentiel de référence est formé par un châssis sur lequel le convertisseur de tension 10 est monté. Par exemple, la troisième trace de puissance 30 peut être reliée électriquement au pôle de potentiel de référence par l'intermédiaire de la paroi latérale 14.

Comme illustré sur la figure 3, la troisième trace de puissance 30 comprend une première borne de connexion 40 connectée électriquement au premier composant de filtrage 22, une deuxième borne de connexion 42 connectée électriquement au deuxième composant de filtrage 24, et une troisième borne de connexion 44 destinée à être connectée électriquement au pôle de potentiel de référence.

Comme représenté sur la figure 2, la troisième borne de connexion 44 de la troisième trace de puissance 30 est connectée au convertisseur de tension et notamment à un support du convertisseur de tension ayant le potentiel de référence.

Les première, deuxième et troisième traces de puissance 26, 28, 30 sont distinctes l'une de l'autre et peuvent être en partie surmoulées de matériau isolant électriquement, par exemple de matériau plastique.

La figure 4 représente une vue schématique d'un bornier, et notamment d'un filtre de mode commun.

Le filtre de mode commun peut comprendre deux composants de filtrage, ici deux condensateurs. Bien entendu, le filtre de mode commun peut comprendre une pluralité de composants de filtrage.

Sur la figure 4, le premier composant de filtrage 22 est connecté électriquement à la première trace de puissance 26 et à une masse via la troisième trace de puissance 30.

Le deuxième composant de filtrage 24 est connecté électriquement à la deuxième trace de puissance 28 et à une masse via la troisième trace de puissance 30, comme représenté sur la figure 4.

Comme représenté sur la figure 4, on note $D1$ la distance entre les première et deuxième bornes de connexion 32, 34 de la première trace de puissance 26 le long de la première trace de puissance 26. Autrement dit, la distance $D1$ correspond à la longueur de la première trace de puissance 26 entre les première et deuxième bornes de connexion 32, 34.

De plus, on note $D3$ la distance entre les première et troisième bornes de connexion 40, 44 de la troisième trace de puissance 30 le long de la troisième trace de puissance 30. Autrement dit, la distance $D3$ correspond à la longueur de la troisième trace de puissance 30 entre les première et troisième bornes de connexion 40, 44.

De façon analogue, comme illustré sur la figure 4, on note $D2$ la distance entre les première et deuxième bornes de connexion 36, 38 de la deuxième trace de puissance 28 le long de la deuxième trace de puissance 28 et $D4$ la distance entre les deuxième et troisième bornes de connexion 42, 44 de la troisième trace de puissance 30 le long de la troisième trace de puissance 30.

Les distances $D1$, $D2$, $D3$ et $D4$ sont configurées de sorte que la somme des distances $D1$ et $D3$ est supérieure ou égale à 85% de la somme des distances D2 et D4 et inférieure ou égale à 115% de la somme des distances D2 et D4.

Autrement dit, les distances D1, D2, D3 et D4 sont configurées de sorte à respecter les équations (1) et (2).

$$85\% \, (D2+D4) \leq (D1+D3) \qquad (1)$$

$$(D1+D3) \leq 115\% \, (D2+D4) \qquad (2)$$

De façon similaire, les distances D1, D2, D3 et D4 peuvent être configurées de sorte que la somme des distances D2 et D4 est supérieure ou égale à 85% de la somme des distances D1 et D3 et inférieure ou égale à 115% de la somme des distances D1 et D3.

En limitant la différence entre la somme D1+D3 des distances D1, D3 et la somme D2+D4 des distances D2, D4, les perturbations électromagnétiques susceptibles d'apparaitre lors d'une circulation de courant dans les traces de puissance 26, 28, 30 sont limitées.

En particulier, les distances D1, D2, D3 et D4 peuvent être telles que D1+D3 = D2+D4, ce qui permet de rendre négligeable ces perturbations électromagnétiques.

La différence entre les distances D1 et D2 peut être inférieure ou égale 10% de la distance maximale entre les distances D1 et D2. Autrement dit, la valeur absolue de la différence entre les distances D1 et D2 est inférieure ou égale à 10% de la distance maximale parmi les distances D1 et D2.

De préférence, la différence entre les distances D1 et D2 est la distance la plus petite possible. Autrement dit, la différence entre les distances D1 et D2 tend à être nulle. Selon un mode de réalisation préféré, les distances D1 et D2 sont égales.

De façon similaire, la différence entre les distances D3 et D4 peut être inférieure ou égale 10% de la distance maximale entre les distances D3 et D4. Selon un mode de réalisation préféré, les distances D3 et D4 sont égales. Autrement dit, la différence entre les distances D3 et D4 est nulle.

Grâce à ces relations entre les distances D1, D2 d'une part et les distances D3, D4 d'autre part, les perturbations électromagnétiques sont encore plus diminuées.

Une symétrie entre les distances D1 et D3 et entre les distances D2 et D4, ainsi qu'entre la somme des distances D1 et D2 et la somme des distances D3 et D4, permet de réduire les perturbations électromagnétiques émises au sein du convertisseur de tension, et par conséquent d'améliorer la compatibilité électromagnétique entre le convertisseur de tension et le réseau électrique.

La somme des distances D1 et D3 peut être inférieure ou égale à 100 mm, et de préférence inférieure ou égale à 60 mm. Préférentiellement, les distances D1 et D3 sont les plus courtes possibles, par exemple la somme des distances D1 et D3 peut être inférieure ou égale à 20 mm. Selon un mode de réalisation préféré, les distances D1 et D3 sont chacune inférieure ou égale à 10 mm.

De la même manière, la somme des distances D2 et D4 peut être inférieure ou égale à 100 mm, de préférence inférieure ou égale à 60 mm, et plus préférentiellement inférieure ou égale à 20 mm.

Selon un mode de réalisation préféré, les distances D1, D2, D3 et D4 respectent les équations (3) et (4).

$$D1+D3 < 20 \text{ mm} \qquad (3)$$

$$D2+D4 < 20 \text{ mm} \qquad (4)$$

Avantageusement, un convertisseur de tension comprenant un bornier dans lequel les distances D1, D2, D3 et D4 respectent les deux équations précédentes remplit les critères de la classe 4 de la norme CISPR25.

De plus, un convertisseur de tension comprenant un bornier dans lequel les distances D1, D2, D3 et D4 sont configurées telles que les distances D1 et D3 respectent l'équation (5) et les distances D2 et D4 respectent l'équation (6), remplit partiellement les critères de la classe 4 de la norme CISPR25.

$$20 \text{ mm} \leq D1+D3 \leq 60 \text{ mm} \qquad (5)$$

$$20 \text{ mm} \leq D2+D4 \leq 60 \text{ mm} \qquad (6)$$

En outre, un convertisseur de tension comprenant un bornier dans lequel les distances D1, D2, D3 et D4 sont configurées de sorte que les distances D1 et D3 respectent l'équation (7) et les distances D2 et D4 respectent l'équation (8) ne remplit pas les critères de la classe 4 de la norme CISPR25.

$$60 \text{ mm} < D1+D3 \qquad (7)$$

$$60 \text{ mm} < D2+D4 \qquad (8)$$

En outre, la troisième trace de puissance 30 peut comprendre une première portion 46 et une deuxième portion 48, notamment visibles sur la figure 4.

La première portion 46 de la troisième trace de puissance 30 peut comprendre les première et troisième bornes de connexion 40, 44 de la troisième trace de puissance 30. Par exemple, la distance D3 peut correspondre à la longueur de la première portion 46 de la troisième trace de puissance 30.

La deuxième portion 48 de la troisième trace de puissance 30 peut comprendre les deuxième et troisième bornes de connexion 42, 44 de la troisième trace de puissance 30. Par exemple, la distance D4 peut correspondre à la longueur de la deuxième portion 48 de la troisième trace de puissance 30.

Comme représenté sur la figure 3, la première trace de puissance 26, le premier composant de filtrage 22 et la première portion 46 de la troisième trace de puissance 30 peuvent être respectivement symétriques à la deuxième trace de puissance 28, au deuxième composant de filtrage 24 et à la deuxième portion 48 de la troisième trace de puissance 30 par rapport à un plan de symétrie passant par la troisième borne de connexion 44 de la troisième trace de puissance 30.

Autrement dit, une première portion du filtre de mode commun comprenant la première trace de puissance 26, le premier composant de filtrage 22 et la première portion 46 de la troisième trace de puissance 30 peut être symétrique à une deuxième portion du filtre de mode commun comprenant la deuxième trace de puissance 28, au deuxième composant de filtrage 24 et à la deuxième portion 48 de la troisième trace de puissance 30 par rapport à un plan orthogonal à un axe noté (y) sur la figure 3.

En particulier, les deuxièmes bornes de connexion 34, 38 des première et deuxième traces de puissance 26, 28 peuvent être disposées symétriquement par rapport au plan passant par la troisième borne de connexion 44 de la troisième trace de puissance 30.

Autrement dit, les deuxièmes bornes de connexion 34, 38 des première et deuxième traces de puissance 26, 28 peuvent être disposées symétriquement par rapport à un plan s'étendant orthogonalement par rapport à l'axe (y).

Les premières bornes de connexion 32, 36 des première et deuxième traces de puissance 26, 28 peuvent être disposées symétriquement par rapport au plan passant par la troisième borne de connexion 44 de la troisième trace de puissance 30.

Les première, deuxième et troisième traces de puissance 26, 28, 30 peuvent s'étendre longitudinalement selon l'axe (y) et/ou selon des axes notés (x) et (z) sur la figure 3. En particulier, les axes (x), (y) et (z) peuvent être orthogonaux entre eux.

Les premières bornes de connexion 32, 36 des première et deuxième traces de puissance 26, 28 peuvent être respectivement situées sur une portion des première et deuxième traces de puissance 26, 28 s'étendant selon l'axe (x).

Les première et deuxième bornes de connexion 40, 42 de la troisième trace de puissance 30 peuvent être respectivement situées sur une portion de la troisième trace de puissance 30 s'étendant selon l'axe (z).

Les deuxièmes bornes de connexion 34, 38 des première et deuxième traces de puissance 26, 28 peuvent être respectivement situées sur une portion des première et deuxième traces de puissance 26, 28 s'étendant selon l'axe (y).

Les deuxièmes bornes de connexion 34, 38 des première et deuxième traces de puissance 26, 28 peuvent être adjacentes. Plus précisément, la distance entre les deuxièmes bornes de connexion 34, 38 des première et deuxième traces de puissance 26, 28 peut être inférieure à 10 mm.

Bien entendu, l'invention n'est nullement limitée aux modes de réalisation décrits et illustrés, qui n'ont été donnés qu'à titre d'exemples. L'invention est définie par la portée des revendications.

## Revendications

1. Convertisseur de tension (10) destiné à contrôler une énergie électrique échangée entre une machine électrique et une source d'alimentation électrique, notamment d'un réseau électrique d'un véhicule automobile, ledit réseau électrique étant un réseau d'énergie électrique continue, ledit convertisseur de tension (10) comprenant un bornier (20) destiné à connecter électriquement ledit convertisseur de tension (10) au réseau électrique, **caractérisé en ce que** le convertisseur de tension a une forme sensiblement cylindrique et le bornier est fixé sur une paroi latérale extérieure de la forme sensiblement cylindrique du convertisseur de tension, et **en ce que** ledit bornier (20) comprend :

   - un premier composant de filtrage (22),
   - un deuxième composant de filtrage (24),
   - une première trace de puissance (26), destinée à relier électriquement un premier pôle du réseau électrique au convertisseur de tension (10), la première trace de puissance (26) comprenant une première borne de connexion (32) connectée électriquement au premier composant de filtrage (22) et une deuxième borne de connexion (34) destinée à être connectée électriquement au premier pôle du réseau électrique,
   - une deuxième trace de puissance (28), destinée à relier électriquement un deuxième pôle du réseau électrique au convertisseur de tension (10), la deuxième trace de puissance (28) comprenant une première borne de connexion (36) connectée électriquement au deuxième composant de filtrage (24) et une deuxième borne de connexion (38) destinée à être connectée électriquement au deuxième pôle du réseau électrique,
   - une troisième trace de puissance (30), destinée à connecter électriquement un pôle de potentiel de référence aux premier et deuxième composants de filtrage (22, 24), la troisième trace de puissance (30) comprenant une première borne de connexion (40) connectée électriquement au premier composant de filtrage (22), une deuxième borne de connexion (42) connectée électriquement au deuxième composant de filtrage (24), et une troisième borne de connexion (44) destinée à être connectée électriquement au pôle de potentiel de référence,

dans lequel la distance D1 entre les première et deuxième bornes de connexion (32, 34) de la première trace de puissance (26) le long de la première trace de puissance, la distance D2 entre les première et deuxième bornes de connexion (36, 38) de la deuxième trace de puissance (28) le long de la deuxième trace de puissance, la distance D3 entre les première et troisième bornes de connexion (40, 44) de la troisième trace de puissance (30) le long de la troisième trace de puissance, et la distance D4 entre les deuxième et troisième bornes de connexion (42, 44) de la troisième trace de puissance (30) le long de la troisième trace de puissance sont configurées de sorte que la somme des distances D1 et D3 est supérieure ou égale à 85% de la somme des distances D2 et D4 et inférieure ou égale à 115% de la somme des distances D2 et D4, et

dans lequel la troisième borne de connexion (44) de la troisième trace de puissance (30) est connectée à un support du convertisseur de tension (10), ledit support formant le pôle de potentiel de référence.

2. Convertisseur de tension (10) selon la revendication 1, dans lequel la différence entre les distances D1 et D2 est inférieure ou égale à 10% de la distance maximale entre les distances D1 et D2, et dans lequel la différence entre les distances D3 et D4 est inférieure ou égale à 10% de la distance maximale entre les distances D3 et D4.

3. Convertisseur de tension (10) selon l'une des revendications 1 ou 2, dans lequel la somme des distances D1 et D3, et la somme des distances D2 et D4, sont inférieures ou égale à 100 mm, de préférence inférieure ou égale à 60 mm, et plus préférentiellement inférieure ou égale à 20 mm.

4. Convertisseur de tension (10) selon l'une des revendications précédentes, dans lequel les premier et deuxième composants de filtrage (22, 24) comprennent respectivement au moins un condensateur.

5. Convertisseur de tension (10) selon l'une des revendications précédentes, dans lequel la troisième trace de puissance (30) comprend :

- une première portion (46), comprenant les première et troisième bornes de connexion (40, 44) de la troisième trace de puissance (30), et
- une deuxième portion (48), comprenant les deuxième et troisième bornes de connexion (42, 44) de la troisième trace de puissance (30),

dans lequel la première trace de puissance (26), le premier composant de filtrage (22) et la première portion (46) de la troisième trace de puissance (30) sont respectivement symétriques à la deuxième trace de puissance (28), au deuxième composant de filtrage (24) et à la deuxième portion (48) de la troisième trace de puissance (30) par rapport à un plan de symétrie passant par la troisième borne de connexion (44) de la troisième trace de puissance (30).

6. Equipement électrique comprenant une machine électrique et un convertisseur de tension (10) selon l'une des revendications précédentes destiné à contrôler une énergie électrique échangée entre la machine électrique et un réseau électrique, ledit réseau électrique étant un réseau d'énergie électrique continue, et dans lequel le convertisseur de tension (10) est monté sur la machine électrique.

**Patentansprüche**

1. Spannungswandler (10) zur Steuerung einer elektrischen Energie, die zwischen einer elektrischen Maschine und einer Stromversorgungsquelle, insbesondere eines Stromnetzes eines Kraftfahrzeugs, ausgetauscht wird, wobei das Stromnetz ein Gleichstromnetz ist, wobei der Spannungswandler (10) eine Verteilereinheit (20) umfasst, die dazu bestimmt ist, den Spannungswandler (10) mit dem Stromnetz elektrisch zu verbinden, **dadurch gekennzeichnet, dass**
der Spannungswandler eine im Wesentlichen zylindrische Form aufweist und die Verteilereinheit an einer Seitenwand außerhalb der im Wesentlichen zylindrischen Form des Spannungswandlers befestigt ist, und dadurch,
dass
die Verteilereinheit (20) Folgendes umfasst:

- eine erste Filterkomponente (22),
- eine zweite Filterkomponente (24),
- eine erste Leistungsbahn (26), die dazu bestimmt ist, einen ersten Pol des Stromnetzes mit dem Spannungswandler (10) elektrisch zu verbinden, wobei die erste Leistungsbahn (26) einen ersten Anschluss (32), der mit der ersten Filterkomponente (22) elektrisch verbunden ist, und einen zweiten Anschluss (34), der dazu bestimmt ist, mit dem ersten Pol des Stromnetzes elektrisch verbunden zu sein, umfasst,
- eine zweite Leistungsbahn (28), die dazu bestimmt ist, einen zweiten Pol des Stromnetzes mit dem Spannungswandler (10) elektrisch zu verbinden, wobei die zweite Leistungsbahn (28) einen ersten Anschluss (36), der mit der zweiten Filterkomponente (24) elektrisch verbunden ist, und einen zweiten Anschluss (38), der dazu bestimmt ist, mit dem zweiten Pol des Stromnetzes elektrisch verbunden zu sein, umfasst,
- eine dritte Leistungsbahn (30), die dazu bestimmt ist, einen Referenzpotential-Pol mit der ersten und zweiten Filterkomponente (22, 24) elektrisch zu verbinden, wobei die dritte Leistungsbahn (30) einen ersten Anschluss (40), der mit der ersten Filterkomponente (22) elektrisch verbunden ist, einen zweiten Anschluss (42), der mit der zweiten Filterkomponente (24) elektrisch verbunden ist, und einen dritten Anschluss (44), der dazu bestimmt ist, mit dem Referenzpotential-Pol elektrisch verbunden zu sein, umfasst,

wobei der Abstand D1 zwischen dem ersten und zweiten Anschluss (32, 34) der ersten Leistungsbahn (26) entlang der ersten Leistungsbahn, der Abstand D2 zwischen dem ersten und zweiten Anschluss (36, 38) der zweiten Leistungsbahn (28) entlang der zweiten Leistungsbahn, der Abstand D3 zwischen dem ersten und dritten Anschluss (40, 44) der dritten Leistungsbahn (30) entlang der dritten Leistungsbahn und der Abstand D4 zwischen dem zweiten und dritten Anschluss (42, 44) der dritten Leistungsbahn (30) entlang der dritten Leistungsbahn so ausgebildet sind, dass die Summe der Abstände D1 und D3 größer als oder gleich 85 % der Summe der Abstände D2 und D4 und kleiner als oder gleich 115 % der Summe der Abstände D2 und D4 ist, und
wobei der dritte Anschluss (44) der dritten Leistungsbahn (30) mit einem Träger des Spannungswandlers (10) verbunden ist, wobei der Träger den Referenzpotential-Pol bildet.

**2.** Spannungswandler (10) nach Anspruch 1, wobei die Differenz zwischen den Abständen D1 und D2 kleiner als oder gleich 10 % des maximalen Abstands zwischen den Abständen D1 und D2 ist, und wobei die Differenz zwischen den Abständen D3 und D4 kleiner als oder gleich 10 % des maximalen Abstands zwischen den Abständen D3 und D4 ist.

**3.** Spannungswandler (10) nach einem der Ansprüche 1 oder 2, wobei die Summe der Abstände D1 und D3 und die Summe der Abstände D2 und D4 kleiner als oder gleich 100 mm, vorzugsweise kleiner als oder gleich 60 mm und besser noch kleiner als oder gleich 20 mm sind.

**4.** Spannungswandler (10) nach einem der vorhergehenden Ansprüche, wobei die erste und zweite Filterkomponente (22, 24) jeweils mindestens einen Kondensator umfassen.

**5.** Spannungswandler (10) nach einem der vorhergehenden Ansprüche, wobei die dritte Leistungsbahn (30) Folgendes umfasst:

- einen ersten Abschnitt (46), der den ersten und dritten Anschluss (40, 44) der dritten Leistungsbahn (30) umfasst, und
- einen zweiten Abschnitt (48), der den zweiten und dritten Anschluss (42, 44) der dritten Leistungsbahn (30) umfasst,

wobei die erste Leistungsbahn (26), die erste Filterkomponente (22) und der erste Abschnitt (46) der dritten Leistungsbahn (30) jeweils zur zweiten Leistungsbahn (28), zur zweiten Filterkomponente (24) bzw. zum zweiten Abschnitt (48) der dritten Leistungsbahn (30) bezogen auf eine Symmetrieebene symmetrisch sind, die durch den dritten Anschluss (44) der dritten Leistungsbahn (30) verläuft.

**6.** Elektrische Ausrüstung umfassend eine elektrische Maschine und einen Spannungswandler (10) nach einem der vorhergehenden Ansprüche zur Steuerung einer elektrischen Energie, die zwischen der elektrischen Maschine und einem Stromnetz ausgetauscht wird, wobei das Stromnetz ein Gleichstromnetz ist, und wobei der Spannungswandler (10) an der elektrischen Maschine angebracht ist.

**Claims**

**1.** Voltage converter (10) intended to control electrical energy exchanged between an electrical machine and an electrical power source, notably of an electrical network of a motor vehicle, said electrical network being a DC electrical energy network, said voltage converter (10) comprising a terminal block (20) intended to electrically connect said voltage converter (10) to the electrical network, **characterized in that** the voltage converter has a substantially cylindrical shape and the terminal block is fixed to an outer side wall of the substantially cylindrical shape of the voltage converter, and **in that** said terminal block (20) comprises:

- a first filtering component (22),
- a second filtering component (24),
- a first power trace (26), intended to electrically connect a first pole of the electrical network to the voltage converter (10), the first power trace (26) comprising a first connection terminal (32) electrically connected to the first filtering component (22) and a second connection terminal (34) intended to be electrically connected to the first pole of the electrical network,
- a second power trace (28), intended to electrically connect a second pole of the electrical network to the voltage converter (10), the second power trace (28) comprising a first connection terminal (36) electrically connected to the second filtering component (24) and a second connection terminal (38) intended to be electrically connected to the second pole of the electrical network,

- a third power trace (30), intended to electrically connect a reference potential pole to the first and second filtering components (22, 24), the third power trace (30) comprising a first connection terminal (40) electrically connected to the first filtering component (22), a second connection terminal (42) electrically connected to the second filtering component (24), and a third connection terminal (44) intended to be electrically connected to the reference potential pole, wherein the distance D1 between the first and second connection terminals (32, 34) of the first power trace (26) along the first power trace, the distance D2 between the first and second connection terminals (36, 38) of the second power trace (28) along the second power trace, the distance D3 between the first and third connection terminals (40, 44) of the third power trace (30) along the third power trace, and the distance D4 between the second and third connection terminals (42, 44) of the third power trace (30) along the third power trace are configured such that the sum of the distances D1 and D3 is greater than or equal to 85% of the sum of the distances D2 and D4 and less than or equal to 115% of the sum of the distances D2 and D4, and

wherein the third connection terminal (44) of the third power trace (30) is connected to a support of the voltage converter (10), said support forming the reference potential pole.

2. Voltage converter (10) according to Claim 1, wherein the difference between the distances D1 and D2 is less than or equal to 10% of the maximum distance between the distances D1 and D2, and wherein the difference between the distances D3 and D4 is less than or equal to 10% of the maximum distance between the distances D3 and D4.

3. Voltage converter (10) according to either of Claims 1 and 2, wherein the sum of the distances D1 and D3, and the sum of the distances D2 and D4, are less than or equal to 100 mm, preferably less than or equal to 60 mm, and more preferably less than or equal to 20 mm.

4. Voltage converter (10) according to one of the preceding claims, wherein the first and second filtering components (22, 24) respectively comprise at least one capacitor.

5. Voltage converter (10) according to one of the preceding claims, wherein the third power trace (30) comprises:

   - a first portion (46), comprising the first and third connection terminals (40, 44) of the third power trace (30), and
   - a second portion (48), comprising the second and third connection terminals (42, 44) of the third power trace (30),

   wherein the first power trace (26), the first filtering component (22) and the first portion (46) of the third power trace (30) are symmetrical respectively to the second power trace (28), to the second filtering component (24) and to the second portion (48) of the third power trace (30) with respect to a plane of symmetry passing through the third connection terminal (44) of the third power trace (30).

6. Electrical equipment comprising an electrical machine and a voltage converter (10) according to one of the preceding claims, intended to control electrical energy exchanged between the electrical machine and an electrical network, said electrical network being a DC electrical energy network, and wherein the voltage converter (10) is mounted on the electrical machine.

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20054257841 A1